(19)

Europäisches
Patentamt
European
Patent Office
Office européen
des brevets

(11) **EP 2 299 525 A1**

(12) **EUROPEAN PATENT APPLICATION**
published in accordance with Art. 153(4) EPC

(43) Date of publication:
**23.03.2011 Bulletin 2011/12**

(21) Application number: **09794538.0**

(22) Date of filing: **07.07.2009**

(51) Int Cl.:
*H01M 4/58* (2010.01)    *H01M 2/16* (2006.01)
*H01M 4/02* (2006.01)

(86) International application number:
**PCT/JP2009/062646**

(87) International publication number:
**WO 2010/005095 (14.01.2010 Gazette 2010/02)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **09.07.2008 JP 2008179606**

(71) Applicant: **Sumitomo Chemical Company, Limited
Tokyo 104-8260 (JP)**

(72) Inventors:
• **SAKAI, Maiko
Tsukuba-shi
Ibaraki 305-0821 (JP)**

• **IMANARI, Yuichiro
Tsukuba-shi
Ibaraki 305-0005 (JP)**
• **YAMAMOTO, Taketsugu
Tsukuba-shi
Ibaraki 305-0045 (JP)**

(74) Representative: **Hart-Davis, Jason et al
Cabinet Beau de Loménie
158, rue de l'Université
75340 Paris Cedex 07 (FR)**

(54) **NONAQUEOUS ELECTROLYTE SECONDARY BATTERY**

(57)    The present invention provides a nonaqueous electrolyte secondary battery. The nonaqueous electrolyte secondary battery comprises a Positive electrode containing a Positive electrode active material capable of being doped and dedoped with alkali metal ions and represented by formula $A_xM_yPO_4$, and a negative electrode. In the above formula, A is one or more alkali metal elements, M is one or more transition metal elements, x is more than 0 and not more than 1.5, y is from 0.8 to 1.2, and the positive electrode active material is obtained by bringing a P source, an A source, an M source and water into contact with each other to obtain a liquid material containing $A_xM_yPO_4$ and then evaporating water from the liquid material.

FIG.1

EP 2 299 525 A1

**Description**

TECHNICAL FIELD

The present invention relates to a nonaqueous electrolyte secondary battery. More specifically, the present invention relates to a nonaqueous electrolyte secondary battery containing, as the positive electrode active material, a transition metal phosphate capable of being doped and dedoped with alkali metal ions.

BACKGROUND ART

A nonaqueous electrolyte secondary battery, particularly, a lithium secondary battery, has been put into practical use and is being widely used as a small power source for cellular phones, notebook computers and the like. Demands for a nonaqueous electrolyte secondary battery as a large power source for electric vehicles, distributed power storages and the like are on the rise.

In the lithium secondary battery, use of a transition metal phosphate as the positive electrode active material is already known. For example, it has been proposed to use lithium iron phosphate ($LiFePO_4$) that is a transition metal phosphate, as the positive electrode active material for lithium secondary batteries (see, for example, Japanese Unexamined Patent Publication No. 2000-294238, and Lecture Collection of The 48th Battery Symposium, page 56). In examples of Japanese Unexamined Publication No. 2000-294238, a lithium secondary battery having, as positive active material, lithium iron phosphate ($LiFePO_4$), which is obtained by lithium carbonate ($Li_2CO_3$), iron(II) dihydrate ($FeC_2O_4 \cdot 2H_2O$) and ammonium dihydrogenphosphate ($NH_4H_2PO_4$), mixing these materials, and then calcining the mixture in a nitrogen atmosphere at a high temperature of 400°C to 800°C for 24 hours, is disclosed. In Lecture Summary Collection of The 48th Battery Symposium, page 56, a lithium secondary battery having, as the positive electrode active material, lithium iron phosphate ($LiFePO_4$), which is obtained by using lithium nitrate ($LiNO_3$), iron(II) nitrate nonahydrate ($Fe(NO_3) \cdot 9H_2O$) and ammonium dihydrogenphosphate ($NH_4H_2PO_4$), dissolving these materials in distilled water to form an aqueous solutions, removing water from the aqueous solution to obtain a precursor, and then calcining the precursor in an $Ar:H_2=90:10$ (vol%) atmosphere at a high temperature of 600°C to 850°C for 12 hours, is disclosed.

As an example using other alkali metals for the positive electrode active material of a nonaqueous electrolyte secondary battery, Japanese National Patent Publication No. 2004-533706 discloses a sodium secondary battery using, as the positive electrode active material, sodium iron phosphate ($NaFePO_4$) that is obtained by mixing raw materials and then calcining the mixture at 750°C for 8 hours.

DISCLOSURE OF THE INVENTION

Nonaqueous electrolyte secondary batteries using, for the positive electrode active material, a transition metal phosphate of a conventional technique as disclosed in these patent publications and Lecture Summary Collection of The 48th Battery Symposium, page 56, is insufficient in view of its discharge capacity. Under these circumstances, an object of the present invention is to provide a nonaqueous electrolyte secondary battery using an easily obtainable positive electrode active material exhibiting a high discharge capacity.

The present inventors have continued intensive studies two attain the above-described objects and have accomplished the present invention.

The invention provides <1> to <8>.

<1> A nonaqueous electrolyte secondary battery comprising a positive electrode containing a positive electrode active material capable of being doped and dedoped with alkali metal ions and represented by formula $A_xM_yPO_4$, and a negative electrode, wherein

A is one or more alkali metal elements,
M is one or more transition metal elements,
x is more than 0 and not more than 1.5,
y is from 0.8 to 1.2, and
the positive electrode active material is obtained by bringing a P source, an A source, an M source and water into contact with each other to obtain a liquid material containing $A_xM_yPO_4$ and then evaporating water from the liquid material.

<2> The nonaqueous electrolyte secondary battery as described in <1>, wherein the positive electrode active material is obtained by bringing an aqueous solution containing P and A into contact with an M compound or an aqueous solution containing an M compound to obtain a liquid material containing $A_xM_yPO_4$ and then evaporating

water from the liquid material.

<3> The nonaqueous electrolyte secondary battery as described in <1>, wherein the positive electrode active material is obtained by bringing an aqueous solution containing A and M into contact with an aqueous solution containing P to obtain a liquid material containing $A_xM_yPO_4$ and then evaporating water from the liquid material.

<4> The nonaqueous electrolyte secondary battery as described in any one of <1> to <3>, wherein a means to evaporate water from the liquid material is heating.

<5> The nonaqueous electrolyte secondary battery as described in any one of <1> to <4>, wherein M contains a divalent transition metal element.

<6> The nonaqueous electrolyte secondary battery as described in any one of <1> to <5>, wherein M contains Fe or Mn.

<7> The nonaqueous electrolyte secondary battery was described in any one of <1> to <6>, wherein the liquid material contains an electrically conductive material and the electrically conductive material remains in the Positive electrode active material.

<8> The nonaqueous electrolyte secondary battery as described in any one of <1> to <7>, wherein the nonaqueous electrolyte secondary battery comprise a separator, and the separator is a separator composed of a porous laminate film in which a heat-resistant porous layer containing a heat-resistant resin and a porous film containing a thermoplastic resin are stacked with each other.

## BRIEF DESCRIPTION OF THE DRAWINGS

Fig. 1 shows powder X-ray diffraction analysis results in Examples 1 to 4.
Fig. 2 shows an SEM observation photograph in Example 1.
Fig. 3 shows an SEM observation photograph in Example 2.
Fig. 4 shows an SEM observation photograph in Example 3.
Fig. 5 shows an SEM observation photograph in Example 4.
Fig. 6 shows powder X-ray diffraction analysis results in Example 5.
Fig. 7 shows an SEM observation photograph in Example 5.
Fig. 8 shows powder X-ray diffraction analysis results in Comparative Examples 1 to 3.
Fig. 9 shows an SEM observation photograph in Comparative Examples 1.
Fig. 10 shows an SEM observation photograph in Comparative Example 2.
Fig. 11 shows an SEM observation photograph in Comparative Example 3.

## MODE FOR CURRYING OUT THE INVENTION

## NONAQUEOUS ELECTROLYTE SECONDARY BATTERY

The nonaqueous electrolyte secondary battery of the present invention comprise a positive electrode and a negative electrode, and usually comprises a positive electrode, a separator, a negative electrode and an electrolytic solution.

## POSITIVE ELECTRODE

The positive electrode contains a positive electrode active material, an electrically conductive materials, a binder and a positive electrode current collector, and is usually produced by loading a positive electrode mixture containing a positive electrode active material, an electrically conductive material and a binder on a positive electrode current collector. First, the positive electrode active material is described.

(Positive Electrode Active Material)

The positive electrode active material can be doped and dedoped with alkali metal ions, and is represented by formula $A_xM_yPO_4$. In the formula, A is one or more alkali metal elements, M is one or more transition metal elements, x is more than 0 and not more than 1.5, and y is from 0.8 to 1.2. Preferably, x is from 0.8 to 1.2, and y is from 0.9 to 1.1, and it is more preferred that x be 1 and y be 1.

The positive electrode active material is produced by bringing a P source, an A source, an M source and water with each other to obtain a liquid material containing $A_xM_yPO_4$, and then evaporating water from the liquid material.

As the P source, the A source and the M source, a P compound, an A compound and an M compound may be used respectively, or elemental substances of P, A and M may be used. The liquid material may be an solution where the solute is completely dissolved, or may be a solid-liquid mixture containing a solid content precipitated after the dissolution.

A P compounds is usually used as the P source, and elemental P such as red phosphorus and black phosphorus may also be used. The P compound is not particularly limited as far as it is a compound containing P, and examples thereof includes an oxide such as $P_2O_5$ and $P_4O_6$; a halide such as $PCl_5$, $PF_5$, $PBr_s$ and $PI_5$, an oxyhalide such as $POF_3$, $POCl_3$ and $POF_3$; an ammonium salt such as $(NH_4)_2HPO_4$ and $(NH_4)H_2PO_4$; and a phosphoric acid such as $H3PO_4$. From the standpoint that the reactivity with the A source and/or the M source is enhanced, the P compound is preferably used as an aqueous solution obtained by dissolving the compound in water (hereinafter, sometimes referred to as an "aqueous P compound solution"). For example, in the case of using an ammonium salt or the like of P, the aqueous P compound solution may be prepared by dissolving the ammonium salt in water. In the case where the P compound is difficult to be dissolved in water, for example, in the case of an oxide, the aqueous P compound solution may be prepared by dissolving the P compound in an acidic aqueous solution of an organic or inorganic acid such as hydrochloric acid, sulfuric acid, nitric acid and acetic acid. Two or more compounds out of water-soluble compounds and poorly soluble compounds above may be used in combination. The P compounds is preferably $(NH_4)_2HPO_4$ and/or $(NH_4)H_2PO_4$ because an aqueous P compound solution is obtained by an easy and simple method, and $(NH_4)_2HPO_4$ is more preferred in that $A_xM_yPO_4$ with a high crystal purity is obtained.

As the A source (A is one or more alkali metal elements), an A compound is usually used, and elemental (metallic) A may also be used. Specific examples of A include one or more members selected from the group consisting of Li, Na, Ka, Rb, Cs and Fr. Because when a electrolyte secondary battery is fabricated, a positive electrode active material exhibiting a high capacity tends to be obtained, A is preferably one or more members selected from the group consisting of Li, Na and K, more preferably Li and/or Na. The A compound is not particularly limited as far as it is a compound containing the above-described alkali metal elements, and examples thereof include an oxide such as $A_2O$ and $A_2O_2$; a hydroxide such as AOH; a halide such as ACl and AF; a nitrate such as $ANO_3$; a sulfate such as $A_2SO_4$; a carbonate such as $A_2CO_3$ and $AHCO_3$; an oxalate such as $A_2C_2O_4$; and an acetate such as $A(CH_3COO)$. From the standpoint that the reactivity with the P source and/or the M source is enhance, the A compounds is preferably used as an aqueous solution obtained by dissolving the compound in water (hereinafter, sometimes referred to as an "aqueous A compound solution"). For example, in the case of using a water-soluble compound such as oxide, hydroxide and halide, the aqueous A compound solution may be produced by dissolving the compound in water. In general, many A compounds are easily soluble in water, but in the case of a poorly soluble compound, the aqueous A compound solution may be prepared by dissolving the compound in an acidic aqueous solutions of an inorganic or organic acid such as hydrochloric acid, sulfuric acid, nitric acid and acetic acid. Two or more compounds out of water-soluble compounds and poorly soluble compounds above may be used in combination. The A compound is preferably a hydroxide and/or a chloride because an aqueous A compound solution is obtained by an easy and simple method, and a hydroxide is more preferred in that, as described later, the aqueous A compound solution is preferably alkaline.

As the M source (M is as transition metal element), an M compounds is usually used, elemental (metallic) M may also be used. Examples of the transition metal element M includes Ti, V, Cr, Mn, Fe, Co, Ni and Cu. M is preferably a divalent transition metal element because a high-capacity secondary battery is obtained when $A_xM_yPO_4$ is used was the positive electrode active material. M more preferably contains Fe or Mn, and M is still more preferably Fe and/or Mn. The M compound is not particularly limited as far as it is a compound containing M, and examples thereof include an oxide such as MO, $MO_2$, $M_2O_3$ and $MO_4$; a hydroxide such as $M(OH)_2$ and $M(OH)_3$; an oxyhydroxide such as MOOCH; a halide such as $MF_2$, $MF_3$, $MCl_2$, $MCl_3$, $MI_2$ and $MI_3$; a nitrate such as $M(NO_3)_2$ and $M(NO_3)_3$; a sulfate such as $M(SO_4)$ and $M_2(SO_4)_3$; a carbonate such as $MCO_3$; an oxalate such as $MC_2O_4$; an acetate such as $M(CH_3COO)_2$ and $M(CH_3COO)_3$; a formate such as $M(HCOO)_2$; a propionate such as $M(C_2H_5COO)_2$; a malonate such as $M(CH_2(COO)_2)$; and a succinate such as $M(C_2H_4(COO)_2)$. From the standpoint that the reactivity with the P source and/or the Na source is enhanced, the M compound is preferably used as an aqueous solution obtained by dissolving the compound in water (hereinafter, sometimes referred to as an "aqueous M compound solution"). For example, in the case of using a water-soluble compound such as halide, nitrate, sulfate, oxalate and acetate, the aqueous M compound solution may be produced by dissolving the compound in water. In the case where the M compound is poorly soluble in water, for example, when the M compound is an oxide, a hydroxide, an oxyhydroxide or a carbonate, the aqueous M compound solution may be prepared by dissolving the compound in an acidic aqueous solution of an inorganic or organic acid such as hydrochloric acid, sulfuric acid, nitric acid and acetic acid. Two or more compound out of water-soluble compounds and poorly soluble compound above may be used in combination. The M compound is preferably a halide because an aqueous M compound solution is obtained by an easy and simple method, and $MCl_2$ is more preferred.

The positive electrode Active material can be obtained, as described above, by bringing a P source, an A source, an M source and water with each other to prepare a liquid material containing $A_xM_yPO_4$ and then evaporating water from liquid material.

The P source, the A source and the M source are preferably used as aqueous solutions containing respective compound because a liquid material, in which the P source, the A source and the M source are uniformly reacted, is obtained. In particular, the M source is preferably used as an aqueous M compound solution. The liquid material may contain components other than the elements P, A and M and water within the range not impairing the object of the present invention.

From the thus-obtained liquid material containing $A_xM_yPO_4$, water is evaporated, whereby a positive electrode active material represented by $A_xM_yPO_4$ is obtained.

The positive electrode active material may also be obtained by bringing an aqueous solution containing P and A into contact with an M compound or an aqueous solution containing an M compound to obtain a liquid material containing $A_xM_yPO_4$ and then evaporating water from the liquid material. The aqueous solution containing P and Na may be prepared by selecting any substances from elemental P, elemental Na, P compounds and Na compounds, and then dissolving them in water. In this case, the aqueous solution containing P and Na may be an aqueous solution formed by bringing a composite compound containing P and Na into contact with water.

The positive electrode active materials can be obtained by bringing an aqueous solution containing A and M into contact with an aqueous solution containing P to obtain a liquid material containing $A_xM_yPO_4$ and then evaporating water from the liquid material. The aqueous solution containing A an M may be produced by selecting any substances form elemental A, elemental M, A compound and M compound and then dissolving them in water. In this case, the aqueous solution containing P and Na may be an aqueous solution formed by brining a composite compound containing A an M into contact with water.

The liquid material containing $A_xM_yPO_4$ preferably contains an electrically conductive material. Examples of the electrically conductive material include a carbonaceous material such as natural graphite, artificial graphite, cokes and carbon black, and an electrically conductive polymer material. By incorporating an electrically conductive material into the liquid material, the electrically conductive property of the positive electrode active material represented by $A_xM_yPO_4$ is significantly enhanced, and when a nonaqueous electrolyte secondary battery is fabricated, the discharge capacity is increased.

A part of A, P and M of the positive electrode active material $A_xM_yPO_4$ may be substituted with other elements as far as the high discharge capacity can be maintained. Other elements include elements such as B, C, N, F, Mg, Al, Si, S, Cl, K, Ca, Sc, Zn, Ga, Ge, Rb, Sr, Y, Zr, Nb, Mo, Tc, Ru, Pd, Rh, Ag, In, Sn, I, Ba, Hf, Ta, W, Ir and Ln (lanthanoid). The method for replacement with other elements is not particularly limited, but a method of incorporating a compound containing other elements into the liquid material containing $A_xM_yPO_4$ is usually employed.

A specific example of the method for preparing the liquid material containing $A_xM_yPO_4$ is described below, regarding the case where A is Na, M is Fe, and the raw materials used are diammonium hydrogenphosphate $((NH_4)_2HPO_4)$ as a P compound, sodium hydroxide (NaOH) as an Na compound, and iron(II) chloride tetrahydrate $(FeCl_2 \cdot 4H_2O)$ as an M compound.

For example, in the production of sodium iron phosphate represented by $NaFePO_4$ that is one preferred composition, sodium hydroxide, iron (II) chloride tetrahydrate and diammonium hydrogenphosphate are weighed to give a predetermine molar ratio for Na:Fe:P, the weighed compounds are each completely dissolved in ion-exchanged water to prepare aqueous solutions containing respective compounds, and the aqueous diammonium hydrogenphosphate solution and the aqueous sodium hydroxide solution are brought into contact with each other to prepare a mixed aqueous solution containing P and Na. Usually, a solid material is not present in the mixed aqueous solution at this point. Subsequently, the mixed aqueous solution and the aqueous iron(II) chloride solution are brought in to contact with each other to obtain a liquid material. Usually, the liquid material at this point is a solid-liquid mixture containing a solid material. Although the reasons are not clear, the aqueous Na compound solution is preferably alkaline so as to more reduce imparity phases when obtaining a solid-liquid mixture.

The order of contact between respective aqueous solutions is not limited to the method above, and a method of bringing the aqueous sodium hydroxide solution into contact with the aqueous iron(II) chloride solution to obtain a mixed aqueous solution containing Na and Fe, and then bringing the aqueous diammonium hydrogenphosphate solution into contact with the mixed aqueous solution to obtain a liquid material may be employed; or a method of bringing the aqueous diammonium hydrogenphosphate into contact with the aqueous iron(II) chloride solution to prepare a mixed aqueous solution containing P and Fe, and then bringing the aqueous sodium hydroxide solution into contact with the mixed aqueous solution to obtain a liquid material may be employed.

In the step of obtaining a mixed aqueous solution and/or a liquid material, stirring can be performed by any method. Examples of the mixing device include a stir mixing by stirrer, a stir mixing by stirring blade, a V-type mixing machine, a W-type mixing machine, a ribbon mixer, a drum mixer and a ball mill.

The method for evaporating water from the liquid material is described below. The evaporation operation may be performed by heating, reduced pressure or natural drying, preferably heating. When water is evaporated by heating, a homogeneous positive electrode active material powders can be easily obtained. Entire water may be removed from the liquid materials only by evaporation, but, if desired, the later-described solid-liquid separation step may be performed before or after the evaporation step.

The step of removing water from the liquid material through evaporation by heating (hereinafter, sometimes referred to as a heating step) is described in detail below.

In view of evaporation rate of water from the liquid material and chemical stability of the obtained positive electrode active material, the heating temperature is preferably from 50°C to 250°C, more preferably from 80°C to 200°C, still more preferably from 90°C to 180°C. It is also possible to reach the above heating temperature rapidly as far as the vessel containing the liquid material is not broken.

The atmosphere in the heating step is not particularly limited, and examples thereof include an oxidizing atmosphere containing oxygen, an air atmosphere, an inert atmosphere containing nitrogen, argon or the like, and a reducing atmosphere containing hydrogen. An oxidizing atmosphere state may be prepared by appropriately mixing oxygen and nitrogen, oxygen and argon, or the like, or a reducing atmosphere state may be prepared by appropriately mixing hydrogen and nitrogen, hydrogen and argon, or the like. The Positive electrode active material used for a nonaqueous electrolyte secondary batter can be easily produced by heating in an air atmosphere.

In the case of performing the heating step, a step of solid-liquid separating the liquid material may also be performed before or after the heating step. The liquid material obtained by bringing the P source, the A source, the M source and water with each other is usually a solid-liquid mixture containing a solid material, and therefore the solid-liquid separation step includes, for example, filtration and centrifugal separation, with filtration being preferred. The solid-liquid separation step is not particularly limited with respect to its atmosphere, and may be performed by optionally selecting the same atmosphere condition as those in the heating step above.

A step of washing the solid content obtained in the solid-liquid separation step or the positive electrode active material obtained in the heating step may also be performed. The solvent used for washing is preferably water, more preferably pure water and/or iron-exchanged water. After the washing with pure water and/or ion-exchanged water, the solid content or positive electrode active material is dried to remove water-soluble impurities and the like. The preferred range of drying temperature is the same as the above-described range of heating temperature. The drying is not particularly limited with respect to its atmosphere, and may be performed by optionally selecting the same atmosphere conditions as those in the soli-liquid separation step, or may be performed in a reduced-pressure atmosphere. Washing and drying may be repeated twice or more.

In the production process of the positive electrode active material, in addition to the above-described operations, pulverization, classification, heating or a surface treatment may be employed in combination. For example, the positive electrode active material obtained by evaporating water may be ground using, for example, a ball mill, a vibration mill or a jet mill, and then subjected to classification or the like to adjust the particle size. The positive electrode active material may be mixed with the aqueous A compounds solution and heated. The heating is not particularly limited with respect to its atmosphere, and may be performed by optionally selecting the same atmosphere conditions as those in the heating step above, and an inert atmosphere and a reducing atmosphere are preferred. The positive electrode active material may be used as a core material, and subjected to a surface treatment of depositing a compound containing one or more elements selected from B, Al, Mg, Ga, In, Si, Ge, Sn, Nb, Ta, W, Mo and transition metal elements on the surface of the particle (core material). Among these, one or more elements selected from B, Al, Mg, Mn, Fe, Co, Ni, Nb, Ta, W and Mo are preferred, and in view of operability, Al is more preferred. Examples of the compound include an oxide, a hydroxide, an oxyhydroxide and an organic acid salt such as carbonate, nitrate and acetate, of the elements above, and a mixture thereof. Among these, an oxide, a hydroxide, an oxyhydroxide, a carbonate and a mixture thereof are preferred, and alumina is more preferred.

(Electrically Conductive Material)

A carbonaceous material can be used as the electrically conductive material. Examples of the carbonaceous material include graphite powder, carbon black (e.g., Ketjen Black (trade name, produced by Ketjen Black International Company), acetylene black), and a fibrous carbonaceous material. Carbon black is a fine particle and has a large surface area, and therefore, by its addition in a small amount to the positive electrode mixture, the electrically conductive property inside the positive electrode can be increased, and the charge/discharge efficiency and output characteristics can be enhanced. However, addition in an excessively large amount may cause reduction in the bonding established between the positive electrode mixture and the positive electrode current collector by the binder, and increase the internal resistance. The ratio of the electrically conductive material in the positive electrode mixture is usually From 5 to 30 parts by weight per 100 parts by weight of the positive electrode active material powder. In the case of using a fibrous carbonaceous material as the electrically conductive material, the ratio above may be lowered.

In view of increasing the electrically conductive property of the positive electrode for nonaqueous electrolyte secondary batteries, it is sometimes preferred that the electrically conductive material contains a fibrous carbonaceous material. In the case of containing a fibrous carbonaceous material, assuming that the length of the fibrous carbonaceous material is a and the diameter of the cross-sectional surface perpendicular to the length direction of the material is b, a/b is usually from 20 to 1,000. Assuming that the length of the fibrous carbonaceous material is a and the volume-based average particle diameter (D50) of primary particles and particles formed by aggregated primary particles in the positive electrode active material is c, a/c is usually from 2 to 100, preferably from 2 to 50. If a/c is less than 2, the electrically conductive property between particles in the positive electrode active material may be insufficient, whereas if it exceeds 100, the bonding between the positive electrode mixture and the positive electrode current collector may decrease. The fibrous carbonaceous material preferably has high electrical conductivity. The electrical conductivity of the fibrous carbonaceous material is measured on a sample obtained by shaping the fibrous carbonaceous material to a density of 1.0 to 1.5 g/cm$^3$. In this case, the electrical conductivity is usually 1 S/cm or more, preferably 2 S/cm or more.

The fibrous carbonaceous material specifically includes a graphitized carbon fiber and a carbon nanotube. The carbon nanotube may be either single-walled or multi-walled. The fibrous carbonaceous material may be prepared by arranging and pulverizing a commercially available product. The pulverization may be either dry pulverization or wet pulverization. The dry pulverization includes pulverization by a ball mill, a rocking mill or a planetary ball mill, and the wet pulverization includes pulverization by a ball mill or a disperser. The disperser includes, Dispermat (product name, manufactured by EKO Instruments Co., Ltd.).

In the case of using a fibrous carbonaceous material for the positive electrode, in view of increasing the electrically conductive property of the positive electrode, the ratio of the fibrous carbonaceous material is preferably from 0.1 to 30 parts by weight per 100 parts by weight of the positive electrode active material powder. A fibrous carbonaceous material and other carbonaceous materials (e.g., graphite powder, carbon black) may be used in combination as the electrically conductive material. In this case, other carbonaceous materials are preferably spherical and fine-particulate. In the case of using the other carbonaceous materials in combination, the ratio of the carbonaceous material is from 0.1 to 30 parts by weight per 100 parts by weight of the positive electrode active material powder.

(Binder)

The binder is, for example, a thermoplastic resin, and specific examples thereof include a fluororesin such as polyvinylidene fluoride (hereinafter, sometimes referred to as PVdF), polytetrafluoroethylene (hereinafter, sometimes referred to as PTFE), ethylene tetrafluoride-propylene hexafluoride-vinylidene fluoride-based copolymer, propylene hexafluoride-vinylidene fluoride-based copolymer, and ethylene tetrafluoride-perfluorovinyl ether-based copolymer; and a polyolefin resin such as polyethylene and polypropylene. Two or more of these resins may be mixed and used. It is possible to use a fluororesin and a polyolefin resin as the binder, and add the fluororesin in a ratio of 1 to 10 wt% and the polyolefin resin in a ratio of 0.1 to 2 wt%, based on the positive electrode mixture, in order to obtain a positive electrode mixture excellent in the bonding property to the positive electrode current collector.

(Positive Electrode Current Collector)

The positive electrode current collector is, for examples, Al, Ni and stainless steel, and in view of easy processability into a thin film and inexpensiveness, Al is preferred. The method for loading the positive electrode mixture on the positive electrode current collector includes a method of pressure-forming; and a method of pasting the mixture with an organic solvent or the like, applying the paste on the positive electrode current collector, drying, and then fixing it by pressing or the like. In the case of pasting the mixture, a slurry composed of a positive electrode active material, an electrically conductive material, a binder and an organic solvent is produced. Examples of the organic solvent include an amine-based solvent such as N,N-dimethylaminopropylamine and diethyltriamine; an ether-based solvent such as tetrahydrofuran; a ketone-basted solvent such as methyl ethyl ketone; an ester-based solvent such as methyl acetate; and an amide-based solvent such as dimethylacetamide and N-methyl-2-pyrrolidone. Examples of the method for applying the positive electrode mixture on the positive electrode current collector include a slit die coating method, a screen coating method, a curtain coating method, a knife coating method, a gravure coating method and an electrostatic spraying method.

(Negative Electrode

The negative Electrode is sufficient is it contain a negative electrode material capable of being doped and dedoped with alkali metal ions at a lower potential than the positive electrode. Examples thereof include an electrode obtained by loading a negative electrode mixture containing a negative electrode material on a negative electrode current collector, and an electrode composed of a negative electrode material alone.

(Negative Electrode Material)

The negative electrode material includes a carbonaceous material, a chalcogen compound (e.g., oxide, sulfide), a nitride, a metal or an alloy that can be doped and dedoped with alkali metal ions at a lower potential than the positive

EP 2 299 525 A1

electrode. A mixture of these negative electrode materials may also be used.

Specific examples of the carbonaceous material include graphite such as natural graphite and artificial graphite, cokes, carbon black, pyrolytic carbons, carbon fiber and calcined organic polymer compound, that can be doped/dedoped with an alkali metal ion at a lower potential than the positive electrode. Such a carbonaceous material, an oxide, a sulfide and a nitride may be used in combination, and may be either crystalline or amorphous. Also, such a carbonaceous material, an oxide, a sulfide or a nitride is loaded mainly on a negative electrode current collector to be used as a negative electrode.

The metal specifically includes lithium metal, sodium metal, silicon metal and tin metal. The alloy specifically includes a lithium alloy, a sodium alloy such as Na-Al, Na-Ni and Na-Si; a silicon alloy such as Si-Zn; a tin alloy such as Sn-Mn, Sn-Co, Sn-Ni, Sn-Cu and Sn-La; and an alloy such as $Cu_2Sb$ and $La_3Ni_2Sn_7$. Such a metal or alloy is mainly used alone as a negative electrode (for example, used in a foil form).

In the case of a lithium secondary battery, out of negative electrode materials, a carbonaceous material mainly composed of graphite such as natural graphite and artificial graphite, is preferably used because of its high potential flatness, low average discharge potential and good cycle property. The shape of the carbonaceous material may be, for example, any of a flake such as natural graphite, a sphere such as mesocarbon microbead, a fiber such as graphitized carbon fiber, and an aggregate of fine powder.

(Binder)

The negative electrode mixture may contain a binder. The binder includes a thermoplastic resin, and specific examples thereof include PVdF, thermoplastic polyimide, carboxymethyl cellulose, polyethylene and polypropylene. In the case where the electrolytic solution does not contain the later-described ethylene carbonate, by using a negative electrode mixture containing ethylene carbonate, the cycle characteristics and large-current discharge characteristics of the secondary battery obtained may be enhanced.

(Negative Electrode Current Collector)

Examples of the negative electrode current collector include Cu, Ni and stainless steel, and in view of resistivity of alloying with sodium and easy processability into a thin film, Cu may be used. The method for loading the negative electrode mixture on the negative electrode current collector is the same as that in the case of the positive electrode, and examples thereof include a method of pressure-forming; and a method of pasting the mixture with a solvent or the like, applying the paste on the negative electrode current collector, drying, and then contact-bonding it by pressing.

SEPARATOR

As a separator, a member having a form, such as porous film, nonwoven fabric and woven fabric and made of a material of a polyolefin resin, such as polyethylene and polypropylene, a fluororesin or a nitrogen-containing aromatic polymer can be used. Separator can use two or more members, and can be made of laminated members. Examples of the separator include separators described in Japanese Unexamined Patent Publication Nos. 2000-30686 and 10-324758. A thickness of the separator is preferably smaller as far as the mechanical strength can be maintained, from the standpoint of increase in the volumetric energy density of a battery and decrease in internal resistance thereof. A thickness of the separator is usually about 5 to 200 $\mu$m, and preferably about 5 to 40 $\mu$m.

The separator preferably has a porous film containing a thermoplastic resin. In a nonaqueous electrolyte secondary battery, it is important, when an extraordinary current flows in the battery due to short-circuit between a positive electrode and a negative electrode, or the like, the separator plays a role by which the current is blocked to prevent an overcurrent from flowing (to shutdown). It is required for a separator that the shutdown (clogging of micropores of a porous film when the separator has a porous film containing a thermoplastic resin) is achieved at a low temperature as possible when the temperature exceeds a usual use temperature, and even when the temperature in the battery rises to a certain high temperature after the shutdown, the separator maintain the shutdown state without being ruptured due to the temperature, in other words, have high heat resistance. Such a thermal rupture can be more prevented by using a separator composed of a laminated porous film in which a heat-resistant porous layer containing a heat-resistant material and a porous film containing a thermoplastic resin stacked with each other. The heat-resistant porous layer can be stacked on both sides of porous film.

Next, the separator composed of a porous laminate film in which a heat-resistant porous layer comprising a heat-resistant resin and a porous film containing a thermoplastic resin are stacked each other is described below. A thickness of the separator is usually 40 $\mu$m or less, preferably 20 $\mu$m or less. Assuming that a thickness of the heat-resistant porous layer is A ($\mu$m) and a thickness of the porous film is B ($\mu$m), the value of A/B is preferably from 0.1 to 1. Considering the ion permeability, the permeability, of the separator is, in terms of Gurley permeability, preferably from 50 to 300 seconds/100 ml, more preferably from 50 to 200 seconds/100 ml. A void content of the separator is usually from 30 to 80 vol%, and preferably from 40 to 70 Vol%.

In the porous laminate film, the heat-resistant porous layer contains a heat-resistant resin. In order to elevate the ion permeability, a thickness of the heat-resistant porous layer is preferably from 1 to 10 $\mu$m, more preferably from 1 to 5 $\mu$m, and particularly preferably from 1 to 4 $\mu$m to be a thinner heat-resistant porous layer. The heat-resistant porous layer has fine pores, and the size (diameter) of the pore is usually 3 $\mu$m or less, preferably 1 $\mu$m or less. The heat-resistant porous layer may contain a filler described later.

The heat-resistant resin includes polyamide, polyimide, polyamideimide, polycarbonate, polyacetal, polysulfone, polyphenylene sulfide, polyether ketone, aromatic polyester, polyethersulfone and polyetherimide. From the standpoint of further enhancing the heat resistance, polyamide, polyimide, polyamideimide, polyethersulfone polyetherimide are preferred; and polyimide, polyimide and polyamideimide are more preferred. The heat-resistant resin is more preferably a nitrogen-containing aromatic polymer, such as aromatic polyamide (para-oriented aromatic polyamide, meta-oriented aromatic polyamide), aromatic polyimide and aromatic polyamideimide, still preferably an aromatic polyamide, and yet still more preferably, in view of productivity, a para-oriented aromatic polyamide (hereinafter, referred to as "para-aramide"). In addition, the heat-resistant resin also includes poly-4-methylpentene-1, and a cyclic olefin-based polymer. By using such a heat-resistant resin, the heat resistance of the heat-resistant porous layer can be enhanced, i.e. the thermal film rupture temperature can be raised.

The thermal film rupture temperature depends on the types of heat-resistant resin, and is usually 160°C or more. The thermal film rupture temperature can be elevated to at most about 400°C in the case of using nitrogen-containing aromatic polymer, to at most about 250°C in the case of using poly-4-methylpentene-1, and to at most about 300°C in the case of using a cyclic olefin-based polymer, as the heat resistant resin, respectively.

The para-aramide is obtained by condensation polymerization of a para-oriented aromatic diamine and a para-oriented aromatic dicarboxylic acid halide, and is substantially composed of a repeating unit where the amide bond is bonded at the para-position or equivalently oriented position of the aromatic ring (for example, the oriented position extending coaxially or in parallel to the opposite direction, such as 4,4'-biphenylene, 1,5-naphthalene, and 2,6-naphthalene). The para-aramide includes a para-aramide having a para-oriented-type and quasi-para-oriented-type structures. Specific examples thereof include poly(paraphenyleneterephthalamide), poly(parabenzamide), poly(4,4'-benzanilideterephthalamide), poly(paraphenylene-4,4'-biphenylenedicarboxylic acid amide), poly(paraphenylene-2,6-naphthalenedicarboxylic acid amide), poly(2-chloro-paraphenyleneterephthalamide), and paraphenylenecerephthalamide/2,6-dichloroparaphenyleneterephthalamide copolymer.

The aromatic polyimide is preferably a wholly aromatic polyimide produced by condensation polymerization of an aromatic diacid anhydride and an aromatic diamine. Specific examples of the diacid anhydride include pyromellitic dianhydride, 3,3',4,4'-diphenylsulfonetetracarboxylic dianhydride, 3,3',4,4'-benzophenonetetracarboxylic dianhydride, 2,2'-bis(3,4-dicarboxyphenyl)hexafluoropropane, and 3,3',4,4'-biphenyltetracarboxylic dianhydride. Examples of the diamine include oxydianiline, para-phenylenediamine, benzophenonediamine, 3,3'-methylenedianiline, 3,3'-diaminobenzophenone, 3,3'-diaminodiphenylsulfone, and 1,5'-naphthalenediamine. A polyimide soluble in a solvent may be suitably used. Examples of such a polyimide include a polyimide as a polycondensate of 3,3',4,4'-diphenylsulfonetetracarboxylic dianhydride with an aromatic diamine.

Examples of the aromatic polyamideimide include those obtained by condensation polymerization of an aromatic dicarboxylic acid and an aromatic diisocyanate, and those obtained by condensation polymerization of an aromatic diacid anhydride and an aromatic diisocyanate. Specific examples of the aromatic dicarboxylic acid include isophthalic acid and terephthalic acid. Specific examples of the aromatic diacid anhydride include trimellitic acid anhydride. Specific examples of the aromatic diisocyanate include 4,4'-diphenylmethane diisocyanate, 2,4-tolylene diisocyanate, 2,6-tolylene diisocyanate, ortho-tolylene diisocyanate and m-xylylene diisocyanate.

The filler may be any one selected from an organic powder, an inorganic powder and a mixture thereof. The average particle diameter of the particle constituting the filler is preferably from 0.01 to 1 $\mu$m. Examples of the shape of the filler include an approximately spherical shape, a plate shape, a columnar shape, an acicular particle, a whisker shape and a fibrous shape, and any particles of these shapes may be used. The filler is preferably an approximately spherical particle due to ease in forming uniform pores.

The organic powder as the filler includes a powder composed of an organic material, such as a homopolymer of or a copolymer of two or more kinds of styrene, vinyl ketone, acrylonitrile, methyl methacrylate, ethyl methacrylate, glycidyl methacrylate, glycidyl acrylate and methyl acrylate; a fluororesin, such as polytetrafluoroethylene, tetrafluoroethylene-hexafluoropropylene copolymer, tetrafluoroethylene-ethylene copolymer, and polyvinylidene fluoride; a melamine resin; a urea resin; a polyolefin; and polymethacrylate. The organic powders may be used solely, or in admixture of two or more. Among the organic powders, a polytetrafluoroethylene powder is preferred in view of chemical stability.

Examples of the inorganic powder as the filler include a powder composed of an inorganic material, such as metal oxide, metal nitride, metal carbide, metal hydroxide, carbonate and sulfate. Specific examples thereof include a powder composed of alumina, silica, titanium dioxide, or calcium carbonate. The inorganic powders may be used solely, or in admixture of two or more. Among the inorganic powders, an alumina powder is preferred in view of chemical stability. It is preferred that all of the particles constituting the filler be an alumina particle, and more preferred that all of the particles constituting the filler be an alumina particle, and a part or all thereof are an approximately spherical alumina particle.

The content of the filler varies depending on the specific gravity of the material of the filler. For example, in the where all of the particles constituting the filler are alumina particles, weight of the filler is usually from 20 to 95 parts by weight, preferably from 30 to 90 parts by weight, assuming that the total weight of the heat-resistant porous layer is 100 parts by weight. These ranges can be appropriately set, depending on the specific gravity of the material of the filler.

In the porous laminate film, the porous film preferably contains a thermoplastic resin. A thickness of the porous film is usually from 3 to 30 $\mu$m, preferably from 3 to 20 $\mu$m. The porous film has fine pores similarly to the heat-resistant porous layer, the size of the pore is usually 3 $\mu$m or less, preferably 1 $\mu$m or less. A void content of the porous film is usually from 30 to 80 vol%, preferably from 40 to 70 vol%. When a temperature of nonaqueous electrolyte secondary battery exceeds a usual use temperature, the porous film can clog the fine pores due to softening of the thermoplastic resin constituting the porous film. The thermoplastic resin includes a resin that is softened at from 80 to 180°C, and a thermoplastic resin which does not dissolve in the electrolytic solution of a nonaqueous electrolyte secondary battery may be selected. Specific examples of the thermoplastic resin include a polyolefin resin, such as polyethylene and polypropylene, and a thermoplastic polyurethane resin. A mixture of two or more of these resins may be used. In order to activate a shutdown by softening at a lower temperature, the thermoplastic resin is preferably polyethylene. The polyethylene specifically includes a polyethylene, such as a low-density polyethylene, a high-density polyethylene and a linear polyethylene, and also includes an ultrahigh molecular-weight polyethylene (a molecular weight of one million or more). For further enhancing the piercing strength of the porous film, the thermoplastic resin preferably contains at least an ultrahigh molecular-weight polyethylene. In view of production of the porous film, it is sometimes preferred that the thermoplastic resin contain a wax composed of a polyolefin having low molecular-weight (weight average molecular weight of 10,000 or less).

ELECTROLYTE

The examples of the electrolyte of the electrolytic solution include a sodium salt such as $NaClO_4$, $NaPF_6$, $NaAsF_6$, $NaSbF_6$, $NaBF_4$, $NaCF_3SO_3$, $NaN(SO_2CF_3)_2$, $NaN(SO_2(C_2F_5)_2$, $NaN(SO_2CF_3(CO_2CF_3)$, $Na(C_4F_9SO_3)$, $NaC(SO_2CF_3)_3$, $NaBPh_4$, $Na_2B_{10}Cl_{10}$, NaBOB (BOB means bis(oxalate) borate), sodium salt of lower aliphatic carboxylate, and $NaAlCl_4$. A mixture of two or more thereof may be used. Among these, an electrolyte containing, at least one selected from the group consisting of $NaPF_6$, $NaAsF_6$, $NaSbF_6$, $NaBF_4$, $NaCF_3SO_3$ and $NaN(SO_2CF_3)_2$, which contain fluorine, is preferably used as a sodium salt.

Examples of the organic solvent of the electrolytic solution include carbonates, such as propylene carbonate, ethylene carbonate, dimethyl carbonate, diethyl carbonate, vinylene carbonate, isopropyl methyl carbonate, propylmethyl carbonate, ethylmethyl carbonate, 4-trifluoromethyl-1,3-dioxolan-2-one, and 1,2-di(methoxycarbonyloxy)ethane; ethers, such as 1,2-dimethoxyethane, 1,3-dimethoxypropane, pentafluoropropylmethyl ether, 2,2,3,3-tetrafluoropropyldifluoromethyl ether, tetrahydrofuran, and 2-methyltetrahydrofuran; esters, such as methyl formate, methyl acetate, and $\gamma$-butyrolactone; nitrites, such as acetonitrile and butyronitrile; amides, such as N,N-dimethylformamide, and N,N-dimethylacetamide; carbamates, such as 3-methyl-2-oxazolidone; sulfur-containing compound, such as sulfolane, dimethyl sulfoxide, and 1,3-propanesultone; and those obtained by introducing a fluorine substituent into the organic solvent. Usually, two or more of the organic solvents are mixed and used. Among these, a mixed solvent containing carbonates is preferred, and a mixed solvent of cyclic and non-cyclic carbonates, or a mixed solvent of a cyclic carbonate and eters are more preferred.

A solid electrolyte may also be used in place of the electrolytic solution. Examples of the solid electrolyte include an organic polymer electrolyte, such as polyethylene oxide-based polymer, and polymer containing at least one or more of polyorganosiloxane chains or polyoxyalkylene chains. A so-called gel-type electrolyte holding a nonaqueous electrolyte solutions in a polymer can also be used. The use of sulfide electrolyte such as $Na_2S$-$SiS_2$, $Na_2S$-$GeS_2$, $Na_2S$-$P_2S_2$, $Na_2S$-$B_2S_3$; or inorganic compound electride containing sulfide such as $Na_2S$-$SiS_2$-$Na_3PO_4$, $Na_2S$-$SiS_2$-$Na_2SO4$; and NASICON-type electrolyte such as $NaZr_2(PO_4)_3$ may enhance safety. In the case of using a solid electrolyte in the nonaqueous electrolyte secondary battery, the solid electrolyte sometimes works as a separator, and in this case, a separator may not be necessary.

PRODUCTION METHOD OF NONAQUEOUS ELECTROLYTE SECONDARY BATTERY

For example, an electrode group is obtained by stacking and winding the above-described positive electrode, separator and negative electrode, the electrode group is housed in a container such as battery can, and then the electrode group is impregnated with an electrolytic solution composed of an organic solvent containing an electrolyte, whereby a nonaqueous electrolyte secondary battery can be produced.

The shape of the electrode group includes, for examples, a shape giving a circular, elliptical, rectangular or corner-rounded rectangular cross-sectional surface or the like when the electrode group is cut in the direction perpendicular to the winding axis. The shape of the battery includes, for example, a shape such as paper, coin, cylinder and square.

EXAMPLES

The present invention is described in greater detail by referring to Examples, but the present invention is not limited thereto. The powder X-ray diffraction measurement, particle size distribution measurement, BET specific surface area Measurement and SEM observation of the positive electrode active material ($A_xM_yPO_4$) were performed by the following methods. Also, a coin-type battery for charge/discharge test was produced by the following method.

(1) Powder X-Ray Diffraction Measurement of Positive Electrode Active Material

The measurement was performed under the following conditions by using, as the powder X-ray diffraction apparatus, a powder X-ray diffraction measuring apparatus, Model RINT2500TTR, manufactured by Rigaku Corporation.
X-ray: $CuK\alpha$
Voltage-current: 40 kV-140 mA
Measuring angle range: $2\theta = 10\text{-}80°$
Step: 0.02°
Scan speed: 4°/min
Divergence slit width: (DS) 1°
Scattering slit width: (SS) 1°
Receiving slit width: (RS) 0.3 mm

(2) Particle Size Distribution Measurement of Positive Electrode Active Material

The measurement was performed using Mastersizer 2000 manufactured by Malvern Instruments, Ltd. as the laser diffraction scattering particle size distribution measuring apparatus. For the dispersion medium, an aqueous 0.2 wt% sodium hexametaphosphate solution was used. As the measured value of D50, a value of particle diameter at which 50% accumulation is observed from the smallest particle side in the cumulative particle size distribution on the volume basis was used.

(3) BET Specific Surface Area Measurement of Positive Electrode Active Material

After drying 1 g of positive electrode active material powder at 150°C for 15 minutes in a nitrogen stream, the powder was measured using FlowSorb II2300 manufactured by Micromeritics Instrument Corporation.

(4) SEM Observation of Positive Electrode Active Material

The observation was performed under the condition of an accelerating voltage of 20 kV by using JSM-5500 manufactured by JEOL Datum Ltd as a scanning electron microscope apparatus. Incidentally, as the aspect ratio (a/b) of the particle, 50 particles arbitrarily chosen from the obtained SEM observation photograph were measured for the long diameter a and the short diameter b, and the average value thereof was employed.

(5) Production of Coin-type Battery for Charge/Discharge Test

A positive electrode active material powder described later in Examples, acetylene black (produced by Denki Kagaku Kogyo Kabushiki Kaisha; hereinafter, sometimes referred to as AB) as an electrically conductive material, and PTFE (produced by Daikin Industries, Ltd.) as a binder were mixed and kneaded to give a positive electrode active material:AB:PTFE ratio of 75:20:5 by weight, thereby preparing a positive electrode mixture. The positive electrode mixture was applied on an SUS-made mesh (#100, 100 mm$\phi$) as a positive electrode current collector and then vacuum-dried at 150°C for 8 yours to obtain a positive electrode. The weight of the obtained positive electrode was measured, the weight of the positive electrode mixture was calculated by subtracting the weight of the SUS-made mesh from the weight of the positive electrode, and the weight of the positive electrode material powder was calculated from the weight ratio of the positive electrode mixture. The positive electrode obtained, an electrolytic solution prepared by dissolving $NaClO_4$ in propylene carbonate (hereinafter, sometimes referred to as PC) to a concentration of 1 mol/liter (hereinafter, sometimes referred to as $NaClO_4/PC$), a polyethylene porous film as a separator, and metallic sodium as a negative electrode were mixed to produced a coin-type battery (R2032).

A charge/discharge test was performed by using the coin-type battery and holding the temperature at 25°C under the following conditions.

(Cell Configuration) dipole type

Positive electrode: electrode containing positive electrode active material
Negative electrode: electrode composed of metallic sodium
Electrolyte: 1 M $NaClO_4/PC$

(Discharge Conditions)

Voltage range: 1.5-4.2 V
Charging rate: 0.05C rate (a rate at which the battery reaches full charge in 20 hours)
Discharging rate: 0.05C rate (a rate at which the battery reaches full discharge in 20 hours)

Example 1

(A) Synthesis of Positive Electrode Active Material Powder $S_1$

1.8 g of Sodium hydroxide (NaOH), 2.7 g of diammonium hydrogen phosphate $((NH_4)_2HPO_4)$, and 2.0 g of iron(II) chloride tetrahydrate $(FeCl_2 \cdot 4H_2O)$ were weighed, teach weighed compound was put in a 100 mi-volume glass-made beaker respectively. Subsequently, 33 g of ion-exchanged water was added to each beaker, and the compound was completely dissolved with stirring to prepare an solution of compound. The aqueous sodium hydroxide solution and the aqueous diammonium hydrogenphosphate solution were mixed, and, while thoroughly stirring, the aqueous iron(II) chloride tetrahydrate solution was added thereto to obtain a solid-liquid mixture containing a solid material. The obtained solid-liquid mixture was put in an egg--plant type flask, and the egg-plant type flask was then heated in an oil bath set to 170°C to obtain a desiccated product after evaporation of water. The desiccated product was collected, then washed with water, filtered and dried to obtain Positive Electrode Active Material Powder $S_1$.

(B) Evaluations of Positive Electrode Active Material Powder $S_1$

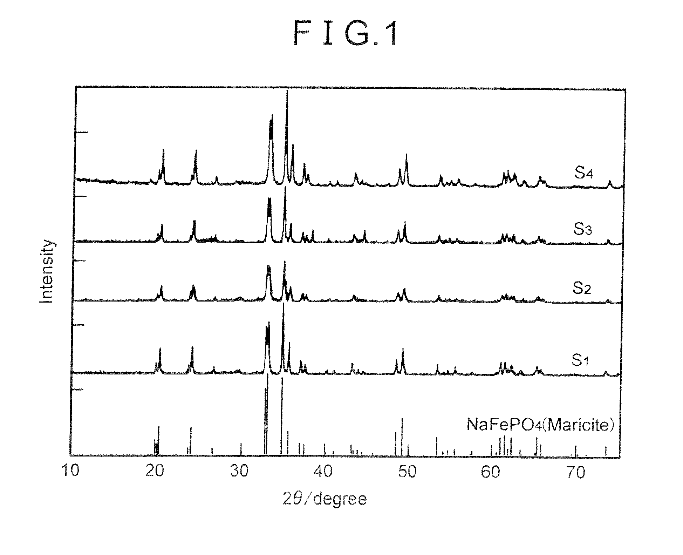

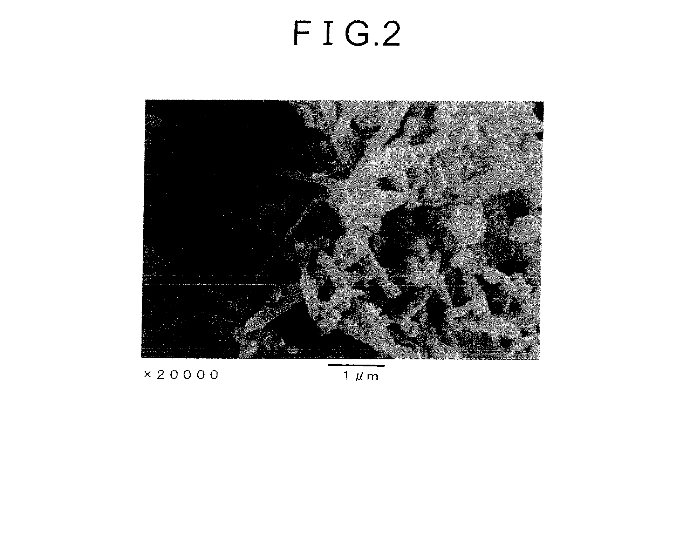

Powder $S_1$ was measured by X-ray diffraction and found to be single-phase orthorhombic $NaFePO_4$ (maricite) (Fig. 1). The particle size distribution and the BET specific surface area of Powder $S_1$ were measured. As a result, D50 was 1.3 $\mu$m, and the BET specific surface area was 20 $m^2$/g. The SEM observation of Powder $S_1$ was performed, and revealed that the powder contained bar-like particles. Assuming that the long axis of a particle is a and the short axis is b, the average of the aspect ratio a/b was 9 (Fig. 2). Thereafter, a coin-type battery was produced using Powder $S_1$ as the positive electrode active material. The obtained battery was subjected to a charge/discharge test. As a result, it was confirmed that the battery is chargeable/dischargeable. The discharge capacity in the 5th cycle was 78 mAh/g.

Example 2

(A) Synthesis of Positive Electrode Active Material Powder $S_2$

Positive Electrode Active Material Powder $S_2$ was obtained in the same manner as in Example 1, except that a separation produce was obtained through solid-liquid separation by filtration in place of the desiccated product obtained by evaporating water, and the separation product was with water, then filtered and dried.

(B) Evaluations of Positive Electrode Active Material Powder $S_2$

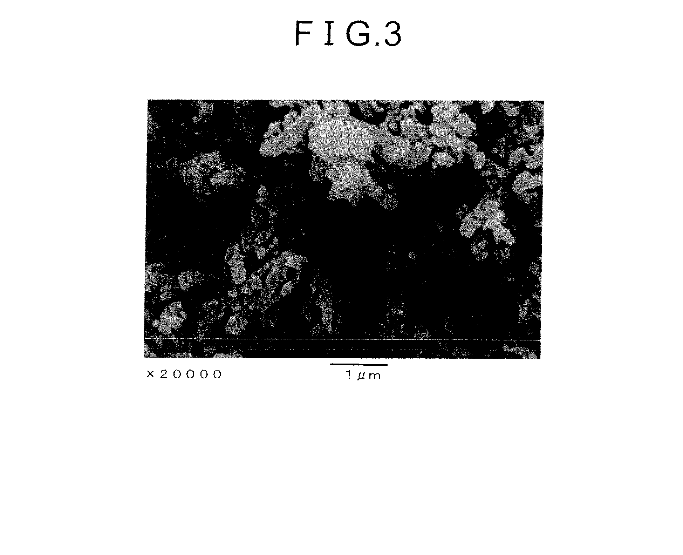

Powder $S_2$ was measured by X-ray diffraction, and found to be single-phase orthorhombic $NaFePO_4$ (Fig. 1). The particle size distribution and the BET specific surface area of Powder $S_2$ were measured, as a result, D50 was 1.8 $\mu$m and the BET specific surface area was 36 $m^2$/g. The SEM observation of Powder $S_2$ was performed, and revealed that the powder contained bar-like particles. Assuming the long axis of a particle is a and the short axis is b, the average of the aspect ratio a/b was 5 (Fig. 3). Thereafter, a coin-type battery was produced using Powder $S_2$ as the positive electrode active material, and subjected to a charge/discharge test. As a result, it was confirmed that the battery is chargeable/dischargeable, and the discharge capacity in the 5th cycle was 80 mAh/g.

Example 3

(A) Synthesis of Positive Electrode Active Material Powder $S_3$

Positive Electrode Active Material Powder $S_3$ was obtained in the same manner as in Example 1, except that the solid-liquid mixture was added with acetylene black as an electrically conductive material in an amount of 10 wt% based on the obtained positive electrode active material, and these were stirred and mixed.

(B) Evaluations of Positive Electrode Active Material Powder $S_3$

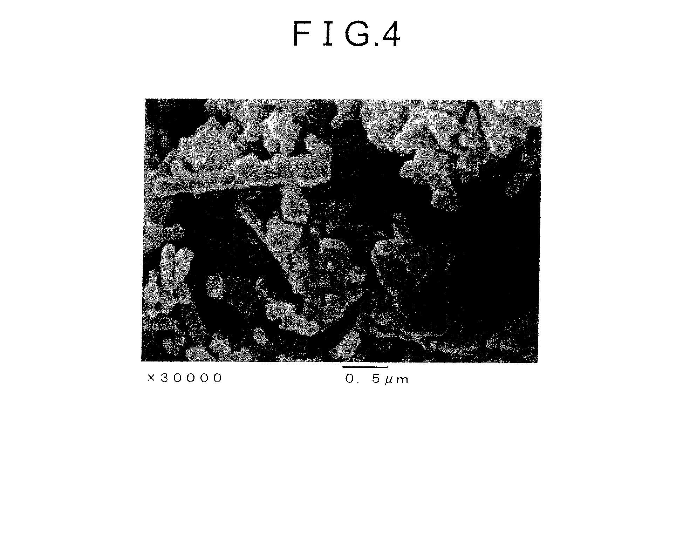

Powder $S_3$ was measured by X-ray diffraction, and found to be single-phase orthorhombic $NaFePO_4$ (Fig. 1). The particle size distribution and the BET specific surface area of Powder $S_3$ were measured, as a result, D50 was 2.6 $\mu$m and the BET specific surface area was 32 $m^2$/g. The SEM observation of Powder $S_3$ was performed, and revealed that the powder contained bar-like particles and acetylene black was uniformly attached to the particle (Fig. 4). Also, assuming the long axis of a particle is a and the short axis is b, the average of the aspect ratio a/b ways 7. Thereafter, a coin-type battery was produced using Powder $S_3$ as the positive electrode active material, and subjected to a charge/ discharge test. As a result, it was confirmed that the battery is chargeable/dischargeable, and the discharge capacity in the 5th cycle was 85 mAh/g.

Example 4

(A) Synthesis of Positive Electrode Active Material Powder $S_4$

Positive Electrode Active Material Powder $S_4$ was obtained in the same manner as in Example 1 except that 2 mL of an aqueous phosphoric acid ($H_3PO_4$) solution (phosphoric acid concentration: 85 wt%, specific gravity: 1.69) was used in place of 2.7 g of diammonium hydrogenphosphate.

(B) Evaluations of Positive Electrode Active Material Powder $S_4$

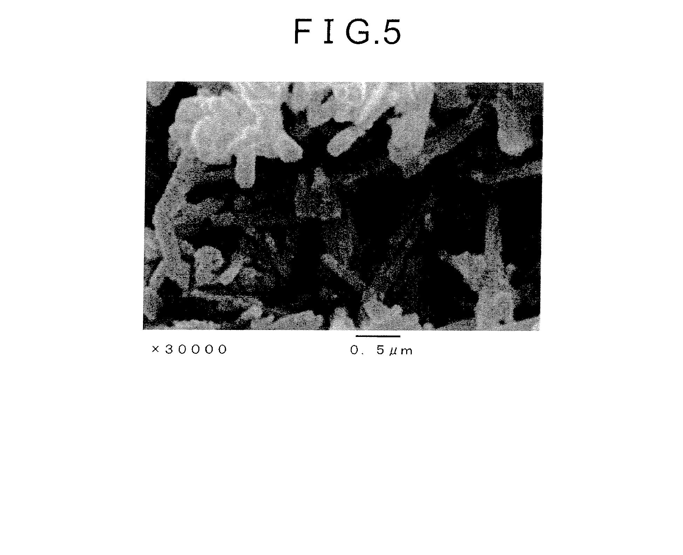

Powder $S_4$ was measured by X-ray diffraction, and found to be single-phase orthorhombic $NaFePO_4$ (Fig. 1). The particle size distribution and BET specific surface area of Powder $S_4$ were measured, as a result, D50 was 0.35 $\mu$m and the BET specific surface area was 18 $m^2$/g. The SEM observation of Powder $S_4$ was performed, and revealed that the powder contained bar-like particles and acetylene black was uniformly attached to the particle (Fig. 5). Alto, assuming the long axis of a particle is a and the short axis is b, the average of the aspect ratio a/b was 6. Thereafter, a coin-type battery was produced using Powder $S_4$ as the positive electrode active material, and subjected to a charge/ discharge test. As a result, it was confirmed that the battery is chargeable/dischargeable, and the discharge capacity in the 5th cycle was 75 mAh/g.

Example 5

(A) Synthesis of Positive Electrode Active Material Powder $S_5$

3.5 g of Sodium hydroxide (NaOH), 3.1 g of manganese (II) chloride tetrahydrate ($MnCl_2 \cdot 4H_2O$), and 2 ml of an aqueous phosphoric acid ($H_3PO_4$) solutions (phosphoric acid concentration: 85 wt%, specific gravity: 1.69) were weighed, and each weighed compound was put in a 100 ml-volume glass-made beaker respectively. Subsequently, 33 g of ion-exchanged water was added to each beaker, and the compound was completely dissolved with stirring to prepare an aqueous solution of each compound. The aqueous sodium hydroxide solution and the aqueous manganese(II) chloride tetrahydrate solution were mixed and while thoroughly stirring, the aqueous phosphoric acid solution was added thereto to obtain a solid-liquid mixture containing a solid material. The obtained solid-liquid mixture was put in an egg-plant type flask, and the egg-plant type flask was then heated in an oil bath set to 170°C to effect evaporation to dryness until water was evaporated, whereby a desiccated product was obtained. The desiccated product was collected, then washed with water, filtered and dried to obtain Positive Electrode Active Material Powder $S_5$.

(B) Evaluations of Positive Electrode Active Material Powder $S_5$

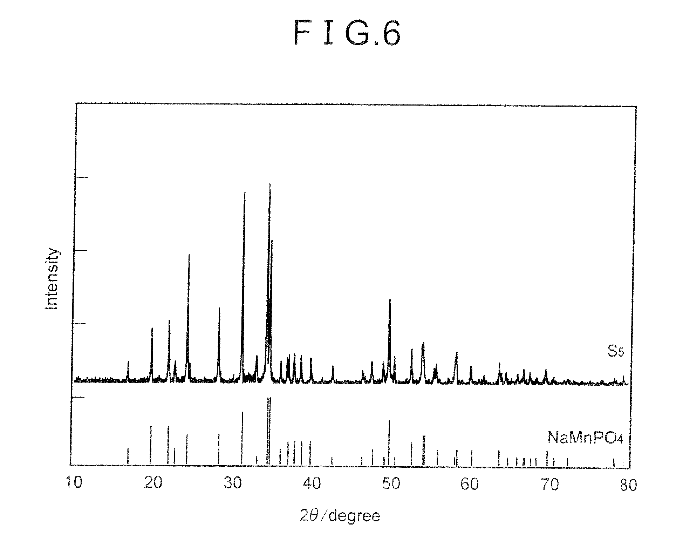

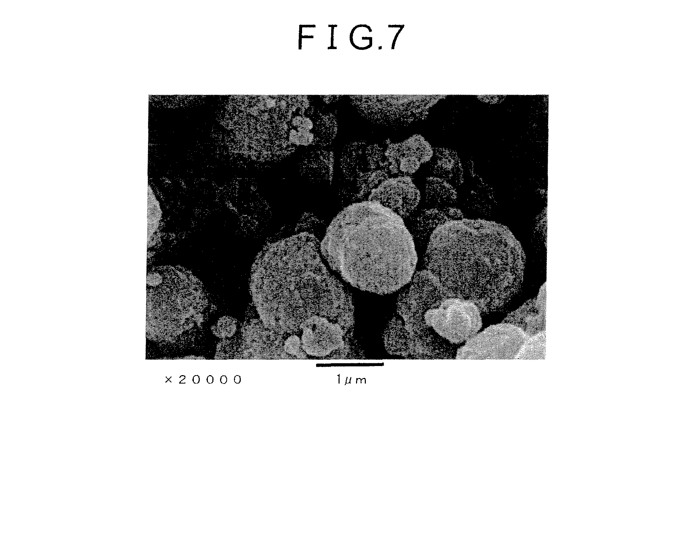

Powder $S_5$ was measured by X-ray diffraction and found to be single-phase orthorhombic $NaMnPO_4$ (Fig. 6). The particle size distribution and the BET specific surface area of Powder $S_5$ were measured, as a result, D50 was 1.67 $\mu$m and the BET specific surface area ways 4.0 $m^2$/g. The SEM observation of Powder $S_5$ was performed, and spherical particles were confirmed (Fig. 7). Whereafter, a coin-type battery was produced using Powder $S_5$ as the positive electrode active material, and subjected to a charge/discharge test. As a result, it was confirmed that the battery is chargeable/dischargeable.

Comparative Examples 1

(A) Synthesis of Comparative Powder $R_1$

Each of 3.2 g of iron sesquioxide ($Fe_2O_3$), 2.1 g of sodium carbonate ($Na_2CO_3$), and 5.1 g of diammonium hydrogenphosphate (($NH_4)_2HPO_4$) was weighed as the raw material, and the raw materials were thoroughly pulverized and mixed to obtain a raw material mixture. The raw material mixture was filled in an alumina boat, and calcined by holding it at a temperature of 750°C for 8 hours in an electric furnace while flowing a nitrogen gas at 5 liter/min to obtain Comparative Powder $R_1$.

(B) Evaluations of Comparative Powder $R_1$

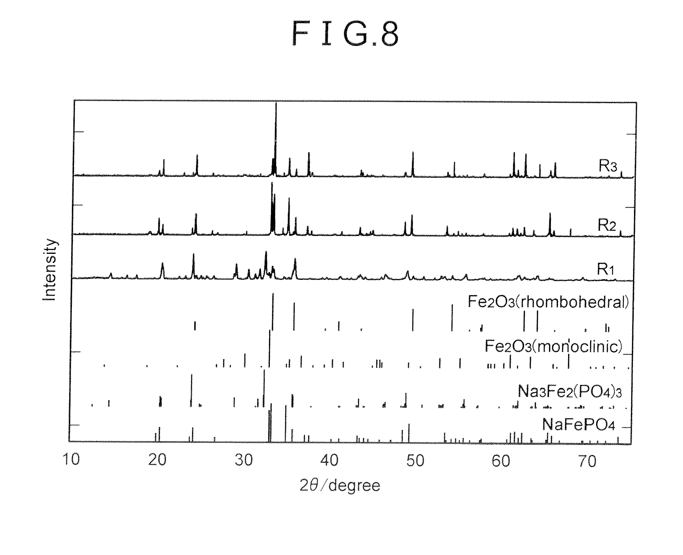

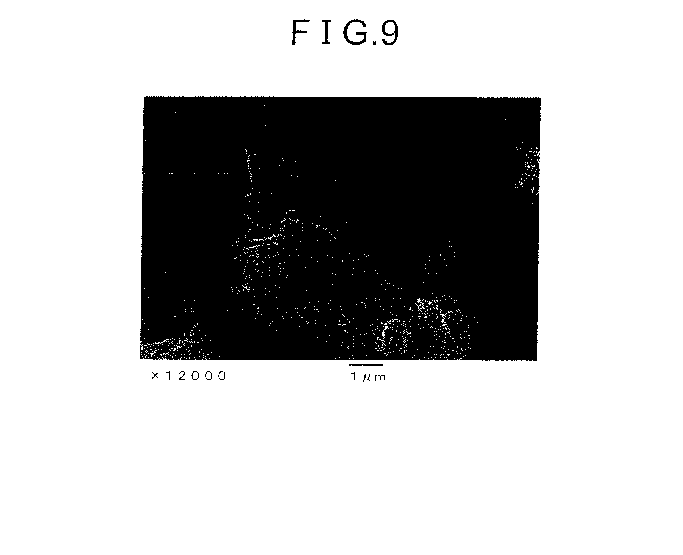

Powder $R_1$ was measured by X-ray diffraction, and the main phase was found to be monoclinic $Na_3Fe_2(PO_4)_3$, failing in obtaining single-phase $NaFePO_4$ (Fig. 8). The particle size distribution and the BET specific surface area of Powder $R_1$ were measured, as a result, D50 was 14 $\mu$m and the BET specific surface area was 0.10 $m^2$/g. The SEM observation of Powder $R_1$ was performed, and revealed that the particle shape is a random shape (Fig. 9). Thereafter, a coin-type battery was produced using Powder $R_1$ as the positive electrode active material, and subjected to a charge/discharge test. As a result, it was confirmed that the battery is chargeable/dischargeable, but the discharge capacity in the 5th cycle was as low as 1 mAh/g.

Comparative Example 2

(A) Synthesis of Comparative Powder $R_2$

Each of 5.1 g of iron oxalate dihydrate ($FeC_2O_4 \cdot 2H_2O$), 1.5 g of sodium carbonate ($Na_2CO_3$), and 3.8 g of diammonium hydrogenphosphate (($NH_4)_2HPO_4$) was weighed as the raw material, and, in a ball mill, the raw materials were thoroughly pulverized and mixed to obtain a raw material mixture. The raw material mixture was filled in an alumina boat, and calcined by holding it at a temperature, of 750°C for 24 hours in an electric furnace while flowing a nitrogen gas at 5 liter/min to obtain Comparative Powder $R_2$.

(B) Evaluations of Comparative Powder $R_2$

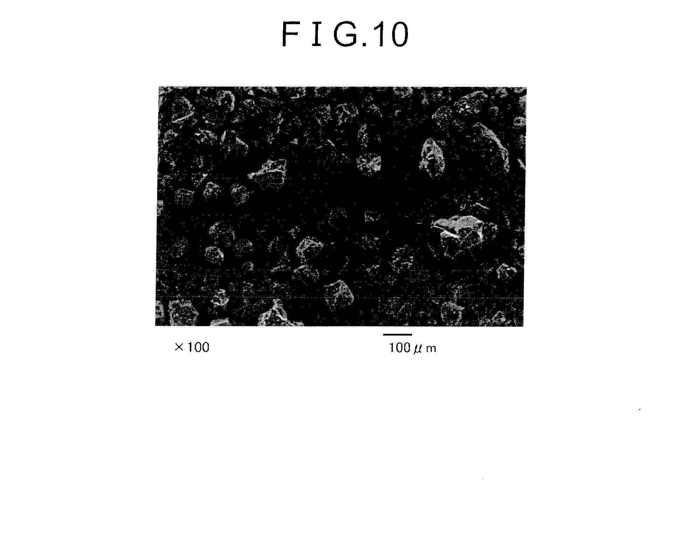

Powder $R_2$ was measured by X-ray diffraction, and the main phase was found to be monoclinic $Fe_2O_3$, failing in obtaining single-phase $NaFePO_4$ (Fig. 8). The particle size distribution and the BET specific surface area of Powder $R_2$ were measured, as a result, D50 was 30 $\mu$m and the BET specific surface area was 0.26 $m^2$/g. The SEM observation of Powder $R_2$ was performed, and revealed that the particle shape is a random shape (Fig. 10). Thereafter, a coin-type battery was produced using Powder $R_2$ as the positive electrode active material, and subjected to a charge/discharge test. As a result, the discharge capacity in the 1st cycle was as very low as 2 mAh/g, and charge/discharge could not be continued until the 5th cycle.

Comparative Example 3

(A) Synthesis of Comparative Powder $R_3$

Comparative Powder $R_3$ was obtained in the same manner as in Comparative Example 2, except for changing the temperature at the calcination to 800°C.

(B) Evaluations of Comparative Powder $R_3$

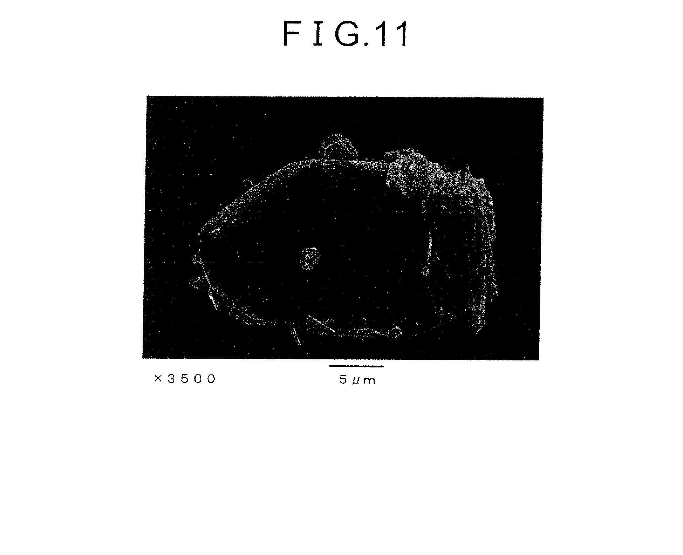

Powder $R_3$ was measured by X-ray diffraction, and the main phase was found to be rhombohedral $Fe_2O_3$, failing in obtaining single-phase $NaFePO_4$ (Fig. 8). The particle size distribution and the BET specific surface area of Powder $R_3$ were measured, as a result, D50 was 17 $\mu$m and the BET specific surface area was 0.47 $m^2$/g. The SEM observation of Powder $R_3$ was performed, and revealed that the particle shape is a random shape (Fig. 11). Thereafter, a coin-type battery was produced using Powder $R_3$ as the positive electrode active material, and subjected to a charge/discharge test. As a result, the discharge capacity in the 1st cycle was as very low as 1 mAh/g, and charge/discharge could not be continued until the 5th cycle.

Production Example 1 (production of porous laminate film)

(1) Production of Coating Liquid

After dissolving 272.7 g of calcium chloride in 4,200 g of N-methyl-2-pyrrolidone (NMP), 132.9 g of para-phenylenediamine was added and completely dissolved therein. To the obtained solution, 243.3 g of terephthalic acid dichloride was gradually added to effect the polymerization, and thereby obtain a para-aramide. The obtained solution was further diluted with NMP to obtain a para-aramide solution (A) having a concentration of 2.0 wt%. To 100 g of the obtained para-aramide solution, 2 g of alumina powder (a) (Alumina C, produced by Nippon Aerosil Co., Ltd., average particle diameter: 0.02 $\mu$m), and 2 g of alumina powder (b) (Sumicorundum AA03, produced by Sumitomo Chemical Co., Ltd., average particle diameter: 0.3 $\mu$m), as a filler in total of 4 g, were added and mixed. The resulting mixture was subjected to a nanomizer three times, filtered with a 1,000-mesh metal screen, and defoamed under reduced pressure to produce a coating slurry (B). The amount of the alumina powder (filler) was 67 wt%, based on the total weight of the para-aramide alumina powder.

(2) Production and Evaluation of Porous Laminate Film

As a porous film which can effect shutdown, a polyethylene porous film (film thickness of 12 $\mu$m, air permeability of 140 seconds/100 ml, average pore diameter of 0.1 $\mu$m, void content of 50%) was used. The polyethylene porous film above was fixed on a 100 $\mu$m-thick PET film, and the coating slurry (B) was applied on the porous film by a bar coater manufactured by Tester Sangyo Co,. Ltd. The coated porous film on the PET film was, while maintaining the integrity, dipped in water, which is a poor solvent, to precipitate a para-aramide porous film (heat-resistant porous layer). After that, the solvent was dried to yield a porous laminate film in which a heat-resistant porous layer and a polyethylene porous film were stacked each other. The thickness of the porous laminate film was 16 $\mu$m, and the thickness of the para-aramide porous layer (heat-resistant porous layer) was 4 $\mu$m. The air permeability of the porous laminate film was 180 seconds/100 ml, and the void content was 50%. The cross-section of the heat-resistant porous layer in the porous laminate film was observed by a scanning electron microscope (SEM), as a result, the heat-resistant porous layer was found to have relatively small pores of approximately 0.03 to 0.06 $\mu$m and relatively large pores of approximately 0.1 to 1 $\mu$m. Incidentally, evaluations of the porous laminate film were performed as in the followings.

(A) Thickness Measurement

The thicknesses of the porous laminate film and the polyethylene porous film were measured in accordance with JIS standards (K7130-1992). The thickness of the heat-resistant porous layer was determined by subtracting the thickness of the polyethylene porous film from the thickness of the porous laminate film.

(B) measurement of Air Permeability by Gurley Method

The air permeability of the porous laminate film was measured based on JIS P8117 by a digital-timer type Gurley densometer manufactured by Yasuda Seiki Seisakusho, Ltd.

(C) Void Content

The obtained porous laminate film sample was cut into a square shape which is 10 cm on each side, and the weight W (g) and the thickness D (cm) were measured. The weight (Wi (g)) of each layer in the sample was determined, the volume of each layer was determined from Wi and the true specific gravity (true specific gravity i (g/cm$^3$)) of each layer, and the void content (vol%) was determined according to the following formula:

$$\text{Void content (vol\%)} = 100 \times \{1-(W1/\text{true specific gravity 1} + W2/\text{true specific gravity 2} + ... + Wn/\text{true specific gravity n})/(10 \times 10 \times D)\}$$

When the porous laminate film obtained by Production Example 1 is used as a separator in the above examples, the nonaqueous electrolyte secondary batteries can more successfully prevent thermal film rupture.

Although sodium secondary batteries were illustrated in the examples, nonaqueous electrolyte secondary batteries using alkali metals other than sodium secondary battery can be produced by using a positive electrode active material, since the positive electrode active material can be doped and de-doped with the alkali metal.

INDUSTRIAL APPLICABILITY

According to the present invention, a nonaqueous electrolyte secondary batteries is provided. The nonaqueous electrolyte secondary battery has a high capacity, and therefore can be used for various applications including not only small-size applications such as potable electronic device, but also mid-/large-size applications such as hybrid vehicle and electric power storage.

**Claims**

1. A nonaqueous electrolyte secondary battery comprising a positive electrode containing a positive electrode active material capable of being doped and dedoped with alkali metal ions and represented by formula $A_xM_yPO_4$, and a negative electrode, wherein
   A is one or more alkali metal elements,
   M is one or more transition metal elements,
   x is more than 0 and not more than 1.5,
   y is from 0.8 to 1.2, and
   the positive electrode active material is obtained by bringing a P source, an A source, an M source and water into contact with each other to obtain a liquid material containing $A_xM_yPO_4$ and then evaporating water from the liquid material.

2. The nonaqueous electrolyte secondary battery according to claim 1, wherein the positive electrode active material is obtained by bringing an aqueous solution containing P and A into contact with an M compound or an aqueous solution containing an M compound to obtain a liquid material containing $A_xM_yPO_4$ and then evaporating water from the liquid material.

3. The nonaqueous electrolyte secondary battery according to claim 1, wherein the positive electrode active material is obtained by bringing an aqueous solution containing A and M into contact with an aqueous solution containing P to obtain a liquid material containing $A_xM_yPO_4$ and then evaporating water from the liquid material.

4. The nonaqueous electrolyte secondary battery according to any one of claims 1 to 3, wherein a means to evaporate water from the liquid material is heating.

5. The nonaqueous electrolyte secondary battery according to any one of claims 1 to 4, wherein M contains a divalent transition metal element.

6. The nonaqueous electrolyte secondary battery according to any one of claims 1 to 5, wherein M contains Fe or Mn.

7. The nonaqueous electrolyte secondary battery according to any one of claims 1 to 6, wherein the liquid material contains an electrically conductive material and the electrically conductive material remains in the positive electrode active material.

8. The nonaqueous electrolyte secondary battery according to any one of claims 1 to 7, wherein the nonaqueous electrolyte secondary battery comprises a separator, and the separator is a separator composed of a porous laminate film in which a heat-resistant porous layer containing a heat-resistant resin and a porous film containing a thermoplastic resin are stacked with each other.

# F I G.1

# FIG.2

×20000                    1 μm

# F I G.3

×20000       1 μm

# F I G.4

×30000    0. 5μm

# F I G.5

×30000          0. 5μm

# F I G.6

# F I G.7

× 2 0 0 0 0            1 μ m

# F I G.8

# FIG.9

×12000        1 μm

# F I G.10

×100                                         $\overline{100\,\mu\,\text{m}}$

# F I G.11

×3500                    5 μm

EP 2 299 525 A1

**INTERNATIONAL SEARCH REPORT**

| | International application No. |
|---|---|
| | PCT/JP2009/062646 |

A.  CLASSIFICATION OF SUBJECT MATTER
H01M4/58(2006.01)i, H01M2/16(2006.01)i, H01M4/02(2006.01)i

According to International Patent Classification (IPC) or to both national classification and IPC

B.  FIELDS SEARCHED

Minimum documentation searched (classification system followed by classification symbols)
H01M4/58, H01M2/16, H01M4/02

Documentation searched other than minimum documentation to the extent that such documents are included in the fields searched
Jitsuyo Shinan Koho        1922–1996   Jitsuyo Shinan Toroku Koho   1996–2009
Kokai Jitsuyo Shinan Koho   1971–2009   Toroku Jitsuyo Shinan Koho   1994–2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2005-276474 A  (Sumitomo Osaka Cement Co.,<br>Ltd.),<br>06 October, 2005 (06.10.05),<br>Claim 1; Par. No. [0042]<br>(Family: none) | 1,4,5,6<br>8<br>2,3,7 |
| Y | JP 2000-30686 A  (Sumitomo Chemical Co., Ltd.),<br>28 January, 2000 (28.01.00),<br>Full text<br>& US 6447958 B1          & TW 460505 B<br>& CA 2269892 A1 | 8 |
| Y | JP 10-324758 A  (Sumitomo Chemical Co., Ltd.),<br>08 December, 1998 (08.12.98),<br>Full text<br>(Family: none) | 8 |

[X] Further documents are listed in the continuation of Box C.    [ ] See patent family annex.

*   Special categories of cited documents:
"A"  document defining the general state of the art which is not considered   to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

Date of the actual completion of the international search
    01 October, 2009 (01.10.09)

Date of mailing of the international search report
    13 October, 2009 (13.10.09)

Name and mailing address of the ISA/
    Japanese Patent Office

Facsimile No.

Authorized officer

Telephone No.

Form PCT/ISA/210 (second sheet) (April 2007)

28

**INTERNATIONAL SEARCH REPORT**

International application No.

PCT/JP2009/062646

C (Continuation).   DOCUMENTS CONSIDERED TO BE RELEVANT

| Category* | Citation of document, with indication, where appropriate, of the relevant passages | Relevant to claim No. |
|---|---|---|
| P,X<br>P,A | JP 2009-81072 A  (The Furukawa Battery Co., Ltd.),<br>16 April, 2009 (16.04.09),<br>Par. Nos. [0024] to [0027]<br>(Family: none) | 1,4,5,6<br>2,3,7,8 |
| A | JP 2000-294238 A  (Sony Corp.),<br>20 October, 2000 (20.10.00),<br>Claim 1<br>(Family: none) | 1-8 |
| P,A | JP 2009-146773 A  (AGC Seimi Chemical Co., Ltd.),<br>02 July, 2009 (02.07.09),<br>Claim 4<br>(Family: none) | 1-8 |
| P,A | JP 2009-54576 A  (The Nippon Chemical Industrial Co., Ltd.),<br>12 March, 2009 (12.03.09),<br>Claim 1<br>& US 2009/28772 A1      & KR 10-2009/12187 A<br>& CN 101355162 A | 1-8 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000294238 A
- JP 2004533706 A
- JP 2000030686 A
- JP 10324758 A

**Non-patent literature cited in the description**

- *Lecture Collection of The 48th Battery Symposium,* 56
- *Lecture Summary Collection of The 48th Battery Symposium,* 56